# EUROPEAN PATENT SPECIFICATION

(11) **EP 1 168 921 B1**
(45) Date of publication and mention of the grant of the patent: **08.09.2004**
(21) Application number: 00934999.4
(22) Date of filing: 12.04.2000
(51) Int. Cl.: A01N 43/824

(54) **HERBICIDAL COMPOSITIONS FOR PADDY FIELDS**
HERBIZIDE ZUSAMMENSETZUNGEN FÜR REISFELDER
COMPOSITIONS HERBICIDES POUR LES RIZIERES

(30) Priority: 13.04.1999 JP 10581099
(43) Date of publication of application: 09.01.2002
(73) Proprietor: Bayer CropScience S.A., 69009 Lyon (FR)
(72) Inventor: IKEDA, Kaoru, Tsuchiura-Shi, Ibaraki-ken 300-0823 (JP); SUZUKI, Hisato, Inashiki-gun, Ibaraki-ken 300-0332 (JP)
(74) Representative: Rippel, Hans Christoph, Dr.
(86) International application number: PCT/EP2000/004173
(87) International publication number: WO 2000/060944

(56) References cited:
- WO-A-00/03592
- DATABASE WPI Section Ch, Week 199720 Derwent Publications Ltd., London, GB; Class C02, AN 1997-221654 XP002146714 & JP 09 067213 A (RHONE POULENC AGROCHIMIE), 11 March 1997 (1997-03-11)
- DATABASE WPI Section Ch, Week 199644 Derwent Publications Ltd., London, GB; Class C02, AN 1996-439408 XP002146715 & JP 08 217608 A (AMERICAN CYANAMID CO), 27 August 1996 (1996-08-27)
- DATABASE WPI Section Ch, Week 198714 Derwent Publications Ltd., London, GB; Class C02, AN 1987-099076 XP002146716 & JP 62 048606 A (NISSAN CHEM IND LTD), 3 March 1987 (1987-03-03)
- DATABASE WPI Section Ch, Week 198516 Derwent Publications Ltd., London, GB; Class C02, AN 1985-096626 XP002146717 & JP 60 045503 A (NISSAN CHEM IND LTD), 12 March 1985 (1985-03-12)

## Description

### [DETAILED EXPLANATION OF THE INVENTION]

### [INDUSTRIAL FIELD OF INVENTION]

The present invention relates to novel herbicidal compositions, in more detail, to herbicidal compositions for paddy fields showing high herbicidal effect on wide species of annual and perennial weeds in paddy fields, and weeds being resistant against herbicides as enzyme inhibitor of acetobutyric acid synthesis (sulfonyl urea or sulfamoyl urea type herbicides ), with high safety on rice plants, by applying before, at the same time, or after rice transplantation.

### [PRIOR ART]

Hitherto, as herbicides for paddy fields, various herbicides have been introduced into practice, and used widely as single component or as mixed formula containing one or more active ingredients see for example JP8-217608, JP9-67213, JP62-48606 and JP60-45503. However, generally speaking, these herbicides are effective enough on annual weeds, but not enough on perennial weeds. On the other hand, herbicides showing good effect on perennial weeds show insufficient effect on annual weeds. Consequently, there are several problems such as appearance of resistant weeds and phytotoxicity on rice plants.
Especially, in these days, there has been observed an occurrence of weeds showing resistance against herbicides and weeds being resistant against herbicides as enzyme inhibitor of acetobutyric acid synthesis, and it became a problem to control such resistant weeds.
In order to enlarge the weed spectrum and enforce herbicidal efficacy, it has been widely applied to make mixture of two or more than two types of herbicides showing different herbicidal function. However, the enlargement of efficacy of such mixture is usually an additional efficacy, and there has been observed tendency to enlarge the phytotoxicity on rice plants with increasing the herbicidal efficacy.
Furthermore, there have not been found at all any evidence or publication mentioning on efficacy on weeds being resistant against herbicides as enzyme inhibitor of acetobutyric acid synthesis about the compositions of the present invention.

### [PROBLEMS TO BE SOLVED BY THE INVENTION]

There has been desired the development of herbicides showing high herbicidal efficacy on wide species of annual and perennial weeds in paddy fields, and weeds being resistant against herbicides as enzyme inhibitor of acetobutyric acid synthesis with high safety on rice plants.

### [MEANS TO SOLVE THE PROBLEMS]

The inventors of the present invention have studied on the development of paddy field herbicides which satisfy the said desires above of farmers. By combining several compounds having different herbicidal mechanisms and herbicidal spectra in appropriate ratio, there have been found herbicidal compositions controlling various weeds growing in paddy fields in wide range and selectively, with high efficacy by synergism compared with a single component, and high herbicidal efficacy on weeds being resistant against herbicides as an enzyme inhibitor of acetobutyric acid synthesis.
These compositions showed unexpectedly low phytotoxicity on rice plants, nevertheless the herbicidal efficacy was increased synergistically.
Thus, herbicidal compositions of the present invention have been completed.

The present invention can supply the use of compositions characterized by containing as active ingredients one or more compounds selected from the Chemical Group A consisting of Compound (1) : 5-tert-butyl-3-(2,4-dichloro-5-isopropoxyphenyl)-1,3,4-oxadiazol-2(3H)-one (common name : Oxadiazon, published in a UK Patent Official Gazette as Patent No. 1110500 ) represented by the following chemical formula (1) ; 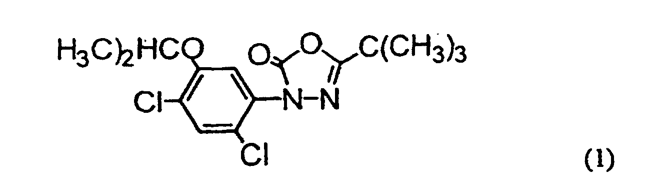 and Compound (2) : 5-tert-butyl-3-(2,4-dichloro-5-propargyloxyphenyl)-1,3,4-oxadiazol-2(3H)-one (common name : Oxadiargyl, published in Pesticide Manual, Ed. 1994 of Crop Protection Publications) represented by the following chemical formula (2) ; 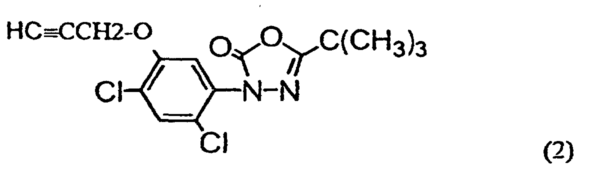 and one or more compounds selected from the Chemical Group B consisting of Compound (3) : methyl α-[[3-(4,6-dimethoxypyrimidin-2-yl)ureido] sulfonyl]-O-toluate (common name : Bensulfuron-methyl, published in a Japanese Patent Official Gazette as laying open No. Sho 57-112379 ) represented by the following chemical formula (3) ; 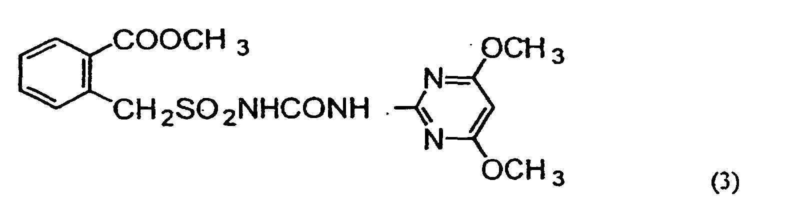 Compound (4) : [(4,6-dimethoxypyrimidin-2-yl)aminocarbonyl]-1-methyl-4-(2-methyl-2H-tetrazol-5-yl)-1H-pyrazol-5-sulfonamide -1H-pyrazol-5-sulfonamide (common name : Azimusulfuron, published in a Japanese Patent Official Gazette as laying open No. Sho 63-185906 ) represented by the following chemical formula (4).; 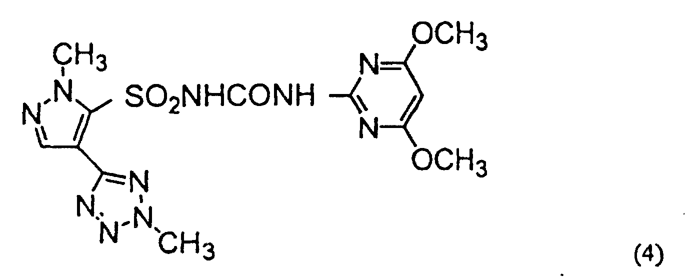 Compound (5) : Ethyl 5-[[3-(4,6-dimethoxypyrimidin-2-yl) ureido]sulfonyl]-1H-1-methylpyrazol-4-carboxylate (common name : Pyrazosulfuron-ethyl, published in a Japanese Patent Official Gazette as laying open No. Sho 59-1480 and No. Sho 59-122488 ) represented by the following chemical formula (5); 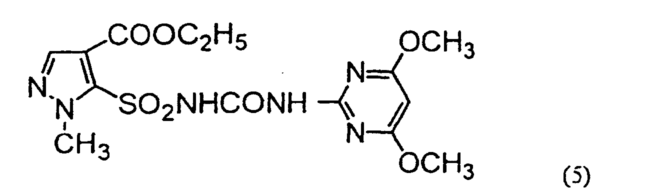 Compound (6) : 1-(2-chloroimidaz[1,2-a]pyridin-3-ylsulfonyl-3-(4,6-dimethoxypyrimidin-2-yl)urea (common name : Imazosulfuron, published in a Japanese Patent Official Gazette as laying open No. Hei 1-139582 ) represented by the following chemical formula (6) ; 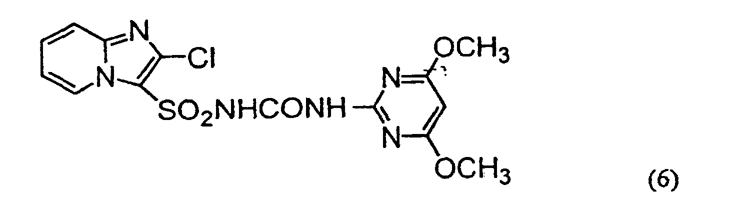 Compound (7) : 1-(4,6-dimethoxypyrimidin-2-yl)-3-(2-ethoxyphenoxysulfonyl)urea (common name : Ethoxysulfuron, published in The Pesticide Manual Eleventh Edition, page 488) represented by the following chemical formula (7) ; 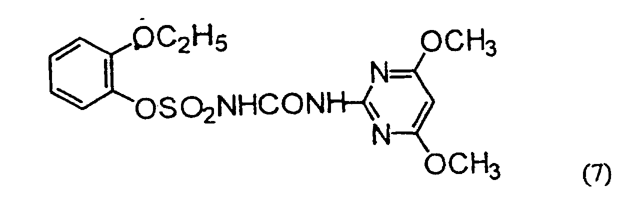 and Compound (8) : 1-[2-(cyclopropylcarbonyl)phenylsulfamoyl]-3-(4,6-dimethoxypyrimidin-2-yl)urea (common name : Cyclosulfamuron, published in a USA Patent Official Gazette as Patent No. 5009699 ) represented by the following chemical formula (8): 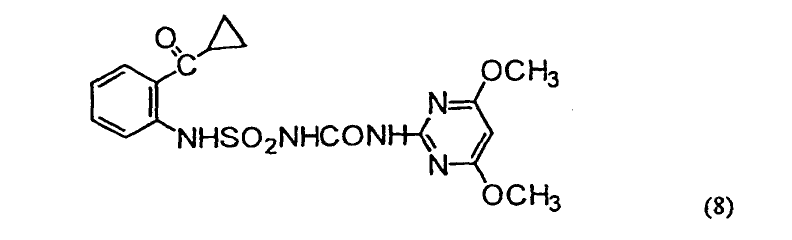 as herbicidal compositions for weeds being resistant against herbicides which are enzyme inhibitors of acetobutyric acid synthesis.
Some of the compositions are novel. The invention thus also relates to novel compositions characterized by containing as active ingredients A oxadiazon and one or more compounds selected from the chemical group B consisting of bensulfuron methyl, azimsulfuron, imazosulfuron and ethoxysulfuron, and to their use as herbicidal compositions for paddy fields.

### [APPLICATION MODEL OF THE INVENTION]

The compounds (1) and (2) being used as active ingredient in the present invention are already known herbicides *per se* published separately in a UK Patent N°. 1110500 and patent application N° 72 25415, and the compounds (2), (3), (4), (5), (6) and (7) are also already known herbicides *per se*.
There is no special limit of mixing ratio of Compound (1) with one or more compounds selected from Compounds (3), (4), (5), (6), (7) or (8), therefore, it can be variable in the wide range depending on application area, targeting weeds, application time, etc. Generally speaking, it is preferable to be 0.0001 to 10 weight part, more preferably 0.001 to 1 weight part of the compound (3), 0.0001 to 10 weight part, or more preferably 0.001 to 1 weight part of the compound (4), 0.0001 to 10 weight part or more preferably 0.001 to 1 weight part of the compound (5), and 0.0001 to 10 weight part or more preferably 0.001 to 1 weight part of the compound (6), 0.0001 to 10 weight part or more preferably 0.001 to 1 weight part of the compound (7), and 0.0001 to 10 weight part or more preferably 0.001 to 1 weight part of the compound (8).
In the same way, there is no special limit of mixing ratio of Compound (2) with one or more compounds selected from Compounds (3), (4), (5), (6), (7) or (8), therefore, it can be variable in the wide range depending on application area, targeting weeds, application time, etc. Generally speaking, it is preferable to be 0.001 to 100 weight part, more preferably 0.01 to 10 weight part of the compound (3), 0.001 to 100 weight part, or more preferably 0.01 to 10 weight part of the compound (4), 0.001 to 100 weight part or more preferably 0.01 to 10 weight part of the compound (5), and 0.001 to 100 weight part or more preferably 0.01 to 10 weight part of the compound (6), 0.001 to 100 weight part or more preferably 0.01 to 10 weight part of the compound (7), and 0.001 to 100 weight part or more preferably 0.01 to 10 weight part of the compound (8).

In the case of practical use as herbicide of the compositions of the present invention, the said active ingredient above can be mixed with already known solid or liquid carrier, diluent, surfactant, or other auxiliary agent for formulation, and prepared into a usual formula as
agrochemicals such as granules, emulsified concentrate, wettable powder, flowable, dry flowable, etc.

As solid carrier being used for preparation of herbicide, there can be cited, for example, clay represented by kaolinites, montmorillonites, illites, polygroskites, etc., more specifically, pyrophyllite, atapulgite, sepiolite, kaolinte, bentonite, saponite, vermiculite, mica, talc, etc., and other inorganic substances such as gypsum, calcium carbonate, dolomite, diatomaceus earth, magnesium line, phosphorus line, zeolite, silica anhydride, synthetic calcium silicate, etc.; organic substances of vegetable origin such as soybean flour, tobacco flour, walnut flour, wheat flour, wood flour, starch, crystalline cellulose, etc., synthetic or natural polymers such as coumarone resin, petroleum resin, alkyd resin, polyvinyl chloride, polyalkylene glycol, ketone resin, ester gum, copal gum, dammar gum, etc.; waxes such as carnauba wax, bee wax, etc., or urea and the like.

As suitable liquid carriers, there can be cited, for example, paraffine or naphthene hydrocarbons such as kerosene, mineral oil, spindle oil, white oil, etc.; aromatic hydrocarbons such as xylene ethylbenzene, cumene, methylnaphthalene, etc.; chlorinated hydrocarbons such as trichloroethylene, monochlorobenzene, o-chlorotoluene, etc.; ethers such as dioxane tetrahydrofuran, etc.; ketones such as methyl ethyl ketone, diisobutyl ketone, cyclohexane, acetophenone, isophorone, etc.; esters such as ethyl acetate, amyl acetate, ethylene glycol acetate, diethylene glycol acetate, dibutyl maleate, diethyl succinate, etc.; alcohols such as n-hexanol, ethylene glycol, diethylene glycol, cyclohexanol, benzyl alcohol, etc.; ether alcohols such as ethylene glycol ethyl ether, ethylene glycol phenyl ether, diethylen glycol ethyl ether, diethylene glycol butyl ether, etc.; polar solvents such as dimethylformamide, dimethyl sulfoxide, etc. or water.

Besides the said substances above, active ingredients and/or other auxiliary agents such as surfactant, adhesive, etc. may be used for improvement of formulation characters, for example, emulsification, dispersion, spreading, combination, destruction control, stabilization of active ingredients, improvement of fluidity, corrosion proof, etc.

As surfactant, there may be used one of any type among nonionic, anionic, cationic, and amphoteric surfactants. Usually nonionic and/or anionic surfactants are used.
Examples of suitable nonionic surfactants include polymerization additives of ethylene oxide with higher alcohol such as lauryl alcohol, steary alcohol, oleyl alcohol, etc.; polymerization additives of ethylene oxide with alkylphenol such as isooctylphenol, nonylphenol, etc.; polymerization additives of ethylene oxide with alkylnaphtol such as butylnaphthol, octylnaphthol, etc. ; polymerization additives of ethylene oxide with higher fatty acid such as palmitic acid, stearic acid, oleic acid, etc. ; polymerization additives of ethylene oxide with amine such as dodecylamine, stearic acid amine, etc. ; polymerization additives of ethylene oxide with higher fatty acid ester of higher alcohol, such as solbitan, etc. ; block polymerization additives of ethylene oxide with propylene oxide, etc.

As suitable anionic surfactant, there can be cited, for example, alkyl sulfate salts such as sodium laurylsulfate, amine salts of sulfuric acid ester of oleyl alcohol, etc. ; alkyl sulfonate salts such as sodium dioctyl sulfonsuccinate, sodium 2-ethylhexenesufonate, etc. ; arylsulfonate salts such as sodium isopropylnaphthalenesulfonate, sodium methylene bisnaphthalenesufonate, sodium ligninsulfonate, sodium dodecyl benzenesulfonate, etc. ; and the like.

Furthermore, for the purposes of improvement of properties of formula, enhancement of herbicidal efficacy, etc., the herbicides of the present invention may be used in combination with polymers and other auxiliary agents, such as casein, gelatin, albumin, glue, lignin sulfonate, sodium alginate, gum arabic, xanthun gum, carboxymethyl cellulose, methyl cellulose, hydroxyethyl cellulose, polyvinyl alcohol, polysaccharide, etc.

The carriers and various auxiliary agents described above can be used alone or in combination with others depending on the types of formula, application site, application purpose etc.

The contents of active ingredients in the various formulas of the present invention thus prepared may vary widely depending on forms of formulas, and suitable content is within the range of usually 0.01 to 99 %, more preferably 0.1 to 80 % by weight.

The formula of wettable powder contains, for example, active ingredients in amount of usually 1 to 90% by weight, and the remainder solid carrier and dispersion wetting agent. If necessary, colloid protection agent, defoaming agent, etc. may be added thereto.

The formula of granule contains, for example, active ingredients in amount of usually 0.01 to 35 % by weight, and the remainder may be solid carrier and surfactant. The active ingredients may be mixed with solid carrier uniformly, or fixed to or adsorbed on the surface of solid carriers uniformly. The diameter of a granule particle is preferably in the range of about 0.05 to 3.0 mm, more preferably 0.2 to 1.5 mm.

The flowable formula contains, for example, active ingredients in amount of usually 0.5 to 50 % by weight, and in addition 3 to 10 % by weight of dispersion wetting agent, and the remainder being water. If necessary, anticorrosive agent, preservative, defoaming agent, etc. may be added thereto.

Appropriate application doses of the composition of the present invention prepared as described above can not be generally determined because of depending on weather conditions, soil conditions, forms of chemical formula, targeting crops, targeting weeds, application time, application way, etc. Usually, based on the total amount of active ingredients, the application doses are 0.01 to 1000 kg, more preferably 0.1 to 100 kg per hectare. Furthermore, a controlling agent with man power saving can be supplied by adding other insecticide, fungicide, plant growth regulator to the compositions of the present invention.

In addition, if necessary, the compositions can be used by mixing at the time of spraying with some other insecticide, fungicide, plant growth regulator, herbicide, fertilizer, etc.

Next, some embodiments of reduction to practice of the present invention will be explained.

### [APPLICATION EXAMPLES]

| Application example 1 | |
|---|---|
| (Granule formula ) | |
| Compound (1) | 6.0 weight % |
| Compound (3) | 0.06 weight % |
| Sodium ligninsulfonate | 3.0 weight % |
| Sodium alkylnaphthalenesulfonate | 1.0 weight % |
| Bentonite | 30.0 weight % |
| Talc | 59.94 weight % |

The above mixture was mixed and pulverized, and granulated by the usual methods with a granulator, and dried to obtain granule formula.

| Application example 2 | |
|---|---|
| (Wettable powder ) | |
| Compound (1) | 12.0 weight % |
| Compound (4) | 0.42 weight % |
| Sodium lingninsulfonate | 3.0 weight % |
| Sodium dialkylnaphthalenesulfonate | 3.0 weight % |
| Kaoline | 81.58 weight % |

The above mixture was mixed and pulverized uniformly to obtain wettable powder formula.

| Application example 3 | |
|---|---|
| (Flowable formula ) | |
| Compound (1) | 12.0 weight % |
| Compound (5) | 1.7 weight % |
| Polyoxyethylene nonylphenyl ether | 2.0 weight % |
| Sodium dioctylsulfosuccinate | 2.0 weight % |
| Xanthun gum | 0.2 weight % |
| Water | 82.1 weight % |

The above mixture was pulverized with a wet ball mill to obtain flowable formula.

| Application example 4 | |
|---|---|
| (Wettable powder ) | |
| Compound (1) | 12.0 weight % |
| Compound (6) | 1.2 weight % |
| Sodium lingninsulfonate | 3.0 weight % |
| Sodium dialkylnaphthalenesulfonate | 3.0 weight % |
| Kaoline | 80.8 weight % |

The above mixture was mixed and pulverized uniformly to obtain wettable powder formula.

| Application example 5 | |
|---|---|
| (Wettable powder) | |
| Compound (1) | 12.0 weight % |
| Compound (7) | 1.2 weight % |
| Sodium lingninsulfonate | 3.0 weight % |
| Sodium dialkylnaphthalenesulfonate | 3.0 weight % |
| Kaoline | 80.8 weight % |

The above mixture was mixed and pulverized uniformly to obtain wettable powder formula.

| Application example 6 | |
|---|---|
| (Flowable formula ) | |
| Compound (2) | 1.0 weight % |
| Compound (3) | 1.7 weight % |
| Polyoxyethylene nonylphenyl ether | 2.0 weight % |
| Sodium dioctylsulfosuccinate | 2.0 weight % |
| Xanthun gum | 0.2 weight % |
| Water | 93.8 weight % |

The above mixture was pulverized with a wet ball mill to obtain flowable formula.

| Application example 7 | |
|---|---|
| (Granule formula) | |
| Compound (2) | 6.0 weight % |
| Compound (4) | 0.06 weight % |
| Sodium ligninsulfonate | 3.0 weight % |
| Sodium alkylnaphthalenesulfonate | 1.0 weight % |
| Bentonite | 30.0 weight % |
| Talc | 65.94 weight % |

The above mixture was mixed and pulverized, and granulated by the usual methods with a granulator, and dried to obtain granule formula.

| Application example 8 | |
|---|---|
| (Wettable powder ) | |
| Compound (2) | 1.0 weight % |
| Compound (5) | 0.42 weight % |
| Sodium lingninsulfonate | 3.0 weight % |
| Sodium dialkylnaphthalenesulfonate | 3.0 weight % |
| Kaoline | 92.58 weight % |

The above mixture was mixed and pulverized uniformly to obtain wettable powder formula.

| Application example 9 | |
|---|---|
| (Flowable formula ) | |
| Compound (2) | 1.0 weight % |
| Compound (6) | 1.7 weight % |
| Polyoxyethylene nonylphenyl ether | 2.0 weight % |
| Sodium dioctylsulfosuccinate | 2.0 weight % |
| Xanthun gum | 0.2 weight % |
| Water | 93.1 weight % |

The above mixture was pulverized with a wet ball mill to obtain flowable formula.

| Application example 10 | |
|---|---|
| (Wettable powder ) | |
| Compound (2) | 1.0 weight % |
| Compound (7) | 0.42 weight % |
| Sodium lingninsulfonate | 3.0 weight % |
| Sodium dialkylnaphthalenesulfonate | 3.0 weight % |
| Kaoline | 92.52 weight % |

The above mixture was mixed and pulverized uniformly to obtain wettable powder formula.

| Application example 11 | |
|---|---|
| (Wettable powder ) | |
| Compound (2) | 1.0 weight % |
| Compound (8) | 1.2 weight % |
| Sodium lingninsulfonate | 3.0 weight % |
| Sodium dialkylnaphthalenesulfonate | 3.0 weight % |
| Kaoline | 91.8 weight % |

The above mixture was mixed and pulverized uniformly to obtain wettable powder formula.
Next, the efficacy of the compositions of the present invention will be described practically with some test examples.

### Test example 1

### (Effects of dose reduction and enhancement of herbicidal efficacy by mixed soil application )

Suitable amounts of paddy field soil and chemical fertilizers were added into a concrete pot with surface of 0.25 m² followed by kneading with a suitable amount of water to convert into the state of paddy field. Three stocks of rice plant seedlings, each one stock being composed of one pair of two seedlings which had been grown in advance in a greenhouse to the stage of two leave, were transplanted into each pot. Afterwards, there were sown predetermined amounts of seeds of Konagi (*Monochoria vaginalis*), Azena (*Lindernia procumbens*), Mizuaoi (*Monochoria korsakowii*), Tamagayatsuri (*Cyperus difformis*), Hotarui (*Scirpus juncoides* ), respectively, and bulbs of Mizugayatsuri (*Cyperus serotinus*), and Urikawa (*Sagittaria pygmaea*) were planted.
On the same day of transplantation, predetermined amount of test compounds, being prepared as single or mixed wettable formulae based on the application examples 1 to 11, were applied.

After 30 days from the application of the chemicals, herbicidal efficacy and phytotoxicity on rice plants were assessed. The results are shown in the tables 2, 3, 4, 5.
In these tables, herbicidal efficacy and phytotoxicity on rice plants were assessed based on the criteria as described in the said table 1 below : 6 different points from ┌0┘ to ┌5┘ for the former, and 6 different points from ┌-┘ to ┌++++┘ for the later.

In addition, fresh weight of each one stock of rice plant including both upper and lower parts from the water surface was determined as index for assess of phytotoxicity.

### Test example 2

### (Effect of dose reduction and enhancement of herbicidal efficacy by mixed foliar and soil application)

In the same methods as the test example 1, test pots were prepared.
On the 10th day after transplantation, predetermined amount of test compounds, being prepared as single or mixed wettable formulas based on the application examples 1 to 11, were applied.
After 30 days from the application of the chemicals, herbicidal efficacy and phytotoxicity on rice plants were assessed. The results are shown in the tables 6, 7, 8 and 9.

In these tables, degree of herbicidal efficacy and phytotoxicity are shown in the same way as the criteria shown in the said table 1 below in six different points from ┌0┘ to ┌5┘ for the former, and six different points from ┌-┘ to ┌++++┘ for the later. Same as the test example 1, fresh weight of each one stock of rice plant including both upper and lower parts from the water surface was determined as index for assess of phytotoxicity

### Test example 3

### (Enhanced herbicidal efficacy of mixtures on weeds being resistant against herbicides as enzyme inhibitor of acetobutyric acid synthesis)

Suitable amounts of paddy field soil and chemical fertilizers were added into a concrete pot with surface of 200 cm² followed by kneading with a suitable amount of water to convert into the state of paddy field. Three stocks of rice plant seedlings, each one stock being composed of one pair of two seedlings which had been grown in advance in a greenhouse to the stage of two leave, were transplanted into each pot.
Afterwards, there were sown predetermined amounts of seeds of Mizuaoi (*Monochoria korsakowii*) being sensitive to or resistant against herbicides as inhibitors of acetobutyric acid synthetic enzyme, and also seeds of Hotarui (*Scirpus juncoides* ) being sensitive to or resistant against herbicides as enzyme inhibitor of acetobutyric acid synthesis.
On the 5th day after transplantation, predetermined amounts of test compounds, being prepared as single or mixed wettable formulas based on the application examples 1 to 5, were applied.

After 30 days from the application of the chemicals, herbicidal efficacy and phytotoxicity on rice plants were assessed. The results are shown in the tables 10,11,12,13,14,15,16,17,18,19, 20 and 21.
In these tables, herbicidal efficacy and phytotoxicity on rice plants were assessed based on the criteria as described in the said table 1 below : 6 different points from ┌0┘ to ┌5┘ for the former, and 6 different points from ┌-┘ to ┌++++┘ for the later.

In addition, fresh weight of each one stock of rice plant including both upper and lower parts from the water surface was determined as index for assess of phytotoxicity.

**Table 1.**

| Criteria for assessment of herbicidal efficacy and phytotoxicity | | | |
|---|---|---|---|
| Herbicidal efficacy | | Phytotoxicity | |
| Point | Efficacy ratio (%) | Point | Degree |
| 5 | 100 | ++++ | withered |
| 4 | over 80 and below 100 | +++ | heavy damage |
| 3 | over 60 and below 80 | ++ | medium damage |
| 2 | over 40 and below 60 | + | small damage |
| 1 | over 20 and below 40 | +/- | slight damage |
| 0 | over 0 and below 20 | - | no damage |

**Table 2.**

| Test example 1 (soil application ) | | | | | | | | | | |
|---|---|---|---|---|---|---|---|---|---|---|
| **No. of Sample** | **Dose (g ai/ha)** | | **Herbicidal efficacy Point)** | | | | | | | **Phytotoxicity** |
| | **Comp (1)** | **Comp (3)** | **A** | **B** | **C** | **D** | **E** | **F** | **G** | **Rice** |
| Comp (1) | 150 | | 5 | 3 | 3 | 3 | 2 | 1 | 0 | - |
| | 300 | | 5 | 4 | 4 | 4 | 4 | 2 | 1 | - |
| | 600 | | 5 | 5 | 5 | 5 | 5 | 2 | 2 | +/- |
| Comp (3) | | 25 | 0 | 3 | 3 | 3 | 3 | 3 | 3 | - |
| | | 50 | 0 | 5 | 5 | 5 | 4 | 5 | 5 | +/- |
| This Invention | 300 | 25 | 5 | 5 | 5 | 5 | 5 | 5 | 5 | - |
| | 600 | 50 | 5 | 5 | 5 | 5 | 5 | 5 | 5 | - |
| Control | | | 0 | 0 | 0 | 0 | 0 | 0 | 0 | - |
| A : Tainubie(*Echinochloa oryyzicola*) | | | | | | | | | | |
| B : Konagi (*Monochoria vaginalis*) | | | | | | | | | | |
| C : Azena (*Lindernia procumbens*) | | | | | | | | | | |
| D : Tamagayatsuri (*Cyperus difformis*) | | | | | | | | | | |
| E : Hotarui(*Cscirpus juncoides*) | | | | | | | | | | |
| F : Mizugayatsuri (*Cyperus serotinus*) | | | | | | | | | | |
| G : Urikawa (*Sagittaria pygmaea*) | | | | | | | | | | |

**Table 3.**

| Test example 1 (soil application) | | | | | | | | | | |
|---|---|---|---|---|---|---|---|---|---|---|
| No. of **Sample** | **Dose (g ai/ha)** | | **Herbicidal efficacy Point)** | | | | | | | **Phytotoxicity** |
| | **Comp (1)** | **Comp (4)** | **A** | **B** | **C** | **D** | **E** | **F** | **G** | **Rice** |
| Comp (1) | 150 | | 5 | 3 | 3 | 3 | 2 | 1 | 0 | - |
| | 300 | | 5 | 4 | 4 | 4 | 4 | 2 | 1 | - |
| | 600 | | 5 | 5 | 5 | 5 | 5 | 2 | 2 | +/- |
| Comp (4) | | 15 | 0 | 3 | 2 | 4 | 3 | 4 | 3 | +/- |
| | | 30 | 2 | 5 | 4 | 5 | 4 | 5 | 4 | + |
| This Invention | 300 | 15 | 5 | 5 | 5 | 5 | 5 | 5 | 5 | - |
| | 600 | 30 | 5 | 5 | 5 | 5 | 5 | 5 | 5 | - |
| Control | | | 0 | 0 | 0 | 0 | 0 | 0 | 0 | - |
| A : Tainubie(*Echinochloa oryyzicola*) | | | | | | | | | | |
| B : Konagi (*Monochoria vaginalis*) | | | | | | | | | | |
| C : Azena (*Lindernia procumberis*) | | | | | | | | | | |
| D : Tamagayatsuri (*Cyperus difformis*) | | | | | | | | | | |
| E : Hotarui(*Cscirpus juncoides*) | | | | | | | | | | |
| F : Mizugayatsuri (*Cyperus serotinus*) | | | | | | | | | | |
| G : Urikawa (*Sagittaria pygmaea*) | | | | | | | | | | |

**Table 4.**

| Test example 1 (soil application) | | | | | | | | | | |
|---|---|---|---|---|---|---|---|---|---|---|
| **No. of Sample** | **Dose (g ai/ha)** | | **Herbicidal efficacy Point)** | | | | | | | **Phytotoxicity** |
| | **Comp (1)** | **Comp (6)** | **A** | **B** | **C** | **D** | **E** | **F** | **G** | **Rice** |
| Comp (1) | 150 | | 5 | 3 | 3 | 3 | 2 | 1 | 0 | - |
| | 300 | | 5 | 4 | 4 | 4 | 4 | 2 | 1 | - |
| | 600 | | 5 | 5 | 5 | 5 | 5 | 2 | 2 | +/- |
| Comp (6) | | 42.5 | 0 | 3 | 2 | 2 | 3 | 4 | 4 | - |
| | | 85 | 0 | 5 | 4 | 4 | 4 | 5 | 5 | +/- |
| This Invention | 300 | 42.5 | 5 | 5 | 5 | 5 | 5 | 5 | 5 | - |
| | 600 | 85 | 5 | 5 | 5 | 5 | 5 | 5 | 5 | - |
| Control | | | 0 | 0 | 0 | 0 | 0 | 0 | 0 | - |
| A : Tainubie(*Echinochloa oryyzicola*) | | | | | | | | | | |
| B : Konagi (*Monochoria vaginalis*) | | | | | | | | | | |
| C : Azena (*Lindernia procumbens*) | | | | | | | | | | |
| D : Tamagayatsuri (*Cyperus difformis*) | | | | | | | | | | |
| E : Hotarui(*Cscirpus juncoides*) | | | | | | | | | | |
| F : Mizugayatsuri (*Cyperus serotinus*) | | | | | | | | | | |
| G : Urikawa (*Sagittaria pygmaea*) | | | | | | | | | | |

**Table 5.**

| Test example 1 (soil application) | | | | | | | | | | |
|---|---|---|---|---|---|---|---|---|---|---|
| **No. of Sample** | **Dose (g ai/ha)** | | **Herbicidal efficacy Point)** | | | | | | | **Phytotoxicity** |
| | **Comp (1)** | **Comp (7)** | **A** | **B** | **C** | **D** | **E** | **F** | **G** | **Rice** |
| Comp (1) | 150 | | 5 | 3 | 3 | 3 | 2 | 1 | 0 | - |
| | 300 | | 5 | 4 | 4 | 4 | 4 | 2 | 1 | - |
| | 600 | | 5 | 5 | 5 | 5 | 5 | 2 | 2 | +/- |
| Comp (7) | | 12 | 0 | 3 | 3 | 3 | 3 | 3 | 3 | +/- |
| | | 24 | 0 | 5 | 4 | 5 | 4 | 4 | 5 | +/- |
| This Invention | 300 | 12 | 5 | 5 | 5 | 5 | 5 | 5 | 5 | - |
| | 600 | 24 | 5 | 5 | 5 | 5 | 5 | 5 | 5 | - |
| Control | | | 0 | 0 | 0 | 0 | 0 | 0 | 0 | - |
| A : Tainubie(*Echinochloa oryyzicola*) | | | | | | | | | | |
| B : Konagi (*Monochoria vaginalis*) | | | | | | | | | | |
| C : Azena (*Lindernia procumbens*) | | | | | | | | | | |
| D : Tamagayatsuri (*Cyperus difformis*) | | | | | | | | | | |
| E : Hotarui(*Cscirpus juncoides*) | | | | | | | | | | |
| F : Mizugayatsuri *(Cyperus serotinus)* | | | | | | | | | | |
| G : Urikawa (*Sagittaria pygmaea*) | | | | | | | | | | |

**Table 6.**

| Test example 2 (soil and foliar application ) | | | | | | | | | | |
|---|---|---|---|---|---|---|---|---|---|---|
| **No. of Sample** | **Dose (g ai/ha)** | | **Herbicidal efficacy Point)** | | | | | | | **Phytotoxicity** |
| | **Comp (1)** | **Comp (3)** | **A** | **B** | **C** | **D** | **E** | **F** | **G** | **Rice** |
| Comp (1) | 150 | | 3 | 1 | 1 | 2 | 1 | 0 | 0 | - |
| | 300 | | 4 | 3 | 3 | 3 | 2 | 1 | 0 | - |
| | 600 | | 4 | 4 | 4 | 4 | 4 | 1 | 1 | +/- |
| Comp (3) | | 25 | 0 | 3 | 2 | 2 | 3 | 3 | 3 | - |
| | | 50 | 0 | 4 | 4 | 4 | 4 | 4 | 4 | +/- |
| This Invention | 300 | 25 | 5 | 5 | 5 | 5 | 5 | 5 | 5 | - |
| | 600 | 50 | 5 | 5 | 5 | 5 | 5 | 5 | 5 | - |
| Control | | | 0 | 0 | 0 | 0 | 0 | 0 | 0 | - |
| A : Tainubie(*Echinochloa oryyzicola*) | | | | | | | | | | |
| B : Konagi (*Monochoria vaginalis*) | | | | | | | | | | |
| C : Azena (*Lindernia procumbens*) | | | | | | | | | | |
| D : Tamagayatsuri (*Cyperus difformis*) | | | | | | | | | | |
| E : Hotarui(*Cscirpus juncoides*) | | | | | | | | | | |
| F : Mizugayatsuri (*Cyperus serotinus*) | | | | | | | | | | |
| G : Urikawa (*Sagittaria pygmaea*) | | | | | | | | | | |

**Table 7.**

| Test example 2 (soil and foliar application) | | | | | | | | | | |
|---|---|---|---|---|---|---|---|---|---|---|
| **No. of Sample** | **Dose (g ai/ha)** | | **Herbicidal efficacy Point)** | | | | | | | **Phytotoxicity** |
| | **Comp (1)** | **Comp (4)** | **A** | **B** | **C** | **D** | **E** | **F** | **G** | **Rice** |
| Comp (1) | 150 | | 3 | 1 | 1 | 2 | 1 | 0 | 0 | - |
| | 300 | | 4 | 3 | 3 | 3 | 2 | 1 | 0 | - |
| | 600 | | 4 | 4 | 4 | 4 | 4 | 1 | 1 | +/- |
| Comp (4) | | 15 | 0 | 3 | 2 | 3 | 2 | 3 | 2 | +/- |
| | | 30 | 1 | 4 | 3 | 4 | 4 | 4 | 4 | +/- |
| This Invention | 300 | 15 | 5 | 5 | 5 | 5 | 5 | 5 | 5 | - |
| | 600 | 30 | 5 | 5 | 5 | 5 | 5 | 5 | 5 | - |
| Control | | | 0 | 0 | 0 | 0 | 0 | 0 | 0 | - |
| *A* : Tainubie(*Echinochloa oryyzicola*) | | | | | | | | | | |
| B : Konagi (*Monochoria vaginalis*) | | | | | | | | | | |
| C : Azena (*Lindernia procumbens*) | | | | | | | | | | |
| D : Tamagayatsuri (*Cyperus difformis*) | | | | | | | | | | |
| E : Hotarui(*Cscirpus juncoides*) | | | | | | | | | | |
| F : Mizugayatsuri (*Cyperus serotinus*) | | | | | | | | | | |
| G : Urikawa (*Sagittaria pygmaea*) | | | | | | | | | | |

**Table 8.**

| Test-example 2 (soil and foliar application) | | | | | | | | | | |
|---|---|---|---|---|---|---|---|---|---|---|
| **No. of Sample** | **Dose (g ai/ha)** | | **Herbicidal efficacy Point)** | | | | | | | **Phytotoxicity** |
| | **Comp (1)** | **Comp (6)** | **A** | **B** | **C** | **D** | **E** | **F** | **G** | **Rice** |
| Comp (1) | 150 | | 3 | 1 | 1 | 2 | 1 | 0 | 0 | - |
| | 300 | | 4 | 3 | 3 | 3 | 2 | 1 | 0 | - |
| | 600 | | 4 | 4 | 4 | 4 | 4 | 1 | - 1 | +/- |
| Comp (6) | | 42.5 | 0 | 3 | 2 | 3 | 3 | 3 | 3 | - |
| | | 85 | 0 | 4 | 4 | 4 | 4 | 4 | 4 | +/- |
| This Invention | 300 | 42.5 | 5 | 5 | 5 | 5 | 5 | 5 | 5 | - |
| | 600 | 85 | 5 | 5 | 5 | 5 | 5 | 5 | 5 | - |
| Control | | | 0 | 0 | 0 | 0 | 0 | 0 | 0 | - |
| A : Tainubie(*Echinochloa oryyzicola*) | | | | | | | | | | |
| B : Konagi (*Monochoria vaginalis*) | | | | | | | | | | |
| C : Azena (*Lindernia procumbens*) | | | | | | | | | | |
| D : Tamagayatsuri (*Cyperus difformis)* | | | | | | | | | | |
| E : Hotarui(*Cscirpus juncoides*) | | | | | | | | | | |
| F : Mizugayatsuri (*Cyperus serotinus*) | | | | | | | | | | |
| G : Urikawa (*Sagittaria pygmaea*) | | | | | | | | | | |

**Table 9.**

| Test example 2 (soil and foliar application) | | | | | | | | | | |
|---|---|---|---|---|---|---|---|---|---|---|
| **No. of Sample** | **Dose (g ai/ha)** | | **Herbicidal efficacy Point)** | | | | | | | **Phytotoxicity** |
| | **Comp (1)** | **Comp (7)** | **A** | **B** | **C** | **D** | **E** | **F** | **G** | **Rice** |
| Comp (1) | 150 | | 3 | 1 | 1 | 2 | 1 | 0 | 0 | - |
| | 300 | | 4 | 3 | 3 | 3 | 2 | 1 | 0 | - |
| | 600 | | 4 | 4 | 4 | 4 | 4 | 1 | 1 | +/- |
| Comp (7) | | 12 | 0 | 3 | 2 | 3 | 3 | 3 | 3 | - |
| | | 24 | 0 | 4 | 4 | 4 | 4 | 4 | 4 | +/- |
| This Invention | 300 | 12 | 5 | 5 | 5 | 5 | 5 | 5 | 5 | - |
| | 600 | 24 | 5 | 5 | 5 | 5 | 5 | 5 | 5 | - |
| Control | | | 0 | 0 | 0 | 0 | 0 | 0 | 0 | - |
| A : Tainubie(*Echinochloa oryyzicola*) | | | | | | | | | | |
| B : Konagi (*Monochoria vaginalis*) | | | | | | | | | | |
| C : Azena (*Lindernia procumbens*) | | | | | | | | | | |
| D : Tamagayatsuri (*Cyperus difformis*) | | | | | | | | | | |
| E : Hotarui(*Cscirpus juncoides*) | | | | | | | | | | |
| F : Mizugayatsuri (*Cyperus serotinus*) | | | | | | | | | | |
| G : Urikawa (*Sagittaria pygmaea*) | | | | | | | | | | |

**Table 10.**

| Test example 3 (soil application) | | | | | | | |
|---|---|---|---|---|---|---|---|
| **No. of Sample** | **Dose (g ai/ha)** | | **Herbicidal efficacy Point)** | | | | **Phytotoxicity** |
| | **Comp (1)** | **Comp (3)** | **A** | **B** | **C** | **D** | **Rice** |
| Comp (1) | 150 | | 3 | 3 | 3 | 3 | - |
| | 300 | | 5 | 5 | 5 | 5 | - |
| | 600 | | 5 | 5 | 5 | 5 | +/- |
| Comp (3) | | 25 | 3 | 0 | 3 | 0 | - |
| | | 50 | 4 | 0 | 4 | 0 | +/- |
| This Invention | 300 | 25 | 5 | 5 | 5 | 5 | - |
| | 600 | 50 | 5 | 5 | 5 | 5 | - |
| Control | | | 0 | 0 | 0 | 0 | - |
| A : Sensitive strain of Mizuaoi (*Monochoria korsakowii*) | | | | | | | |
| B : Resistant strain of Mizuaoi (*Monochoria korsakowii*) | | | | | | | |
| C : Sensitive strain of Hotarui(*Scirpus juncoides*) | | | | | | | |
| D : Resistant strain of Hotarui(*Scirpus juncoides*) | | | | | | | |

**Table 11.**

| Test example 3 (soil application) | | | | | | | |
|---|---|---|---|---|---|---|---|
| **No. of Sample** | **Dose (g ai/ha)** | | **Herbicidal efficacy Point)** | | | | **Phytotoxicity** |
| | **Comp (1)** | **Comp (4)** | **A** | **B** | **C** | **D** | **Rice** |
| Comp (1) | 150 | | 3 | 3 | 3 | 3 | - |
| | 300 | | 5 | 5 | 5 | 5 | - |
| | 600 | | 5 | 5 | 5 | 5 | +/- |
| Comp (4) | | 15 | 2 | 0 | 3 | 0 | +/- |
| | | 30 | 3 | 0 | 4 | 0 | +/- |
| This Invention | 300 | 15 | 5 | 5 | 5 | 5 | - |
| | 600 | 30 | 5 | 5 | 5 | 5 | - |
| Control | | | 0 | 0 | 0 | 0 | - |
| A : Sensitive strain of Mizuaoi (*Monochoria korsakowii*) | | | | | | | |
| B : Resistant strain of Mizuaoi (*Monochoria korsakowii*) | | | | | | | |
| C : Sensitive strain of Hotarui(*Scirpus juncoides*) | | | | | | | |
| D : Resistant strain of Hotarui(*Scirpus juncoides*) | | | | | | | |

**Table 12.**

| Test example 3 (soil application) | | | | | |
|---|---|---|---|---|---|
| **No. of Sample** | **Dose (g ai/ha)** | | **Herbicidal efficacy Point)** | | **Phytotoxicity** |
| | **Comp (1)** | **Comp (5)** | **B** | **D** | **Rice** |
| Comp (1) | 150 | | 3 | 3 | - |
| | 300 | | 5 | 5 | - |
| | 600 | | 5 | 5 | +/- |
| Comp (5) | | 10.5 | 0 | 0 | - |
| | | 21 | 0 | 0 | +/- |
| This Invention | 300 | 10.5 | 5 | 5 | - |
| | 600 | 21 | 5 | 5 | - |
| Control | | | 0 | 0 | - |
| B : Resistant strain of Mizuaoi (*Monochoria korsakowii*) | | | | | |
| D : Resistant strain of Hotarui(*Scirpus juncoides*) | | | | | |

**Table 13.**

| Test example 3 (soil application) | | | | | | | |
|---|---|---|---|---|---|---|---|
| **No. of Sample** | **Dose (g ai/ha)** | | **Herbicidal efficacy Point)** | | | | **Phytotoxicity** |
| | **Comp (1)** | **Comp (6)** | **A** | **B** | **C** | **D** | **Rice** |
| Comp (1) | 150 | | 3 | 3 | 3 | 3 | - |
| | 300 | | 5 | 5 | 5 | 5 | - |
| | 600 | | 5 | 5 | 5 | 5 | +/- |
| Comp (6) | | 42.5 | 2 | 0 | 2 | 0 | - |
| | | 85 | 3 | 0 | 3 | 0 | +/- |
| This Invention | 300 | 42.5 | 5 | 5 | 5 | 5 | - |
| | 600 | 85 | 5 | 5 | 5 | 5 | - |
| Control | | | 0 | 0 | 0 | 0 | - |
| A : Sensitive strain of Mizuaoi (*Monochoria korsakowii*) | | | | | | | |
| B : Resistant strain of Mizuaoi (*Monochoria korsakowii*) | | | | | | | |
| C : Sensitive strain of Hotarui(*Scirpus juncoides*) | | | | | | | |
| D : Resistant strain of Hotarui(*Scirpus juncoides*) | | | | | | | |

**Table 14.**

| Test example 3 (soil application) | | | | | | | |
|---|---|---|---|---|---|---|---|
| **No. of Sample** | **Dose (g ai/ha)** | | **Herbicidal efficacy Point)** | | | | **Phytotoxicity** |
| | **Comp (1)** | **Comp (7)** | **A** | **B** | **C** | **D** | **Rice** |
| Comp (1) | 150 | | 3 | 3 | 3 | 3 | - |
| | 300 | | 5 | 5 | 5 | 5 | - |
| | 600 | | 5 | 5 | 5 | 5 | +/- |
| Comp (7) | | 12 | 2 | 0 | 3 | 0 | - |
| | | 24 | 3 | 0 | 4 | 0 | +/- |
| This Invention | 300 | 12 | 5 | 5 | 5 | 5 | - |
| | 600 | 24 | 5 | 5 | 5 | 5 | - |
| Control | | | 0 | 0 | 0 | 0 | - |
| A : Sensitive strain of Mizuaoi (*Monochoria korsakowii*) | | | | | | | |
| B : Resistant strain of Mizuaoi (*Monochoria korsakowii*) | | | | | | | |
| C : Sensitive strain of Hotarui(*Scirpus juncoides*) | | | | | | | |
| D : Resistant strain of Hotarui(*Scirpus juncoides*) | | | | | | | |

**Table 15.**

| Test example 3 (soil application) | | | | | |
|---|---|---|---|---|---|
| **No. of Sample** | **Dose (g ai/ha)** | | **Herbicidal efficacy Point)** | | **Phytotoxicity** |
| | **Comp (1)** | **Comp (8)** | **B** | **D** | **Rice** |
| Comp (1) | 150 | | 3 | 3 | - |
| | 300 | | 5 | 5 | - |
| | 600 | | 5 | 5 | +/- |
| Comp (8) | | 30 | 0 | 0 | - |
| | | 60 | 0 | 0 | +/- |
| This Invention | 300 | 12 | 5 | 5 | - |
| | 600 | 24 | 5 | 5 | - |
| Control | | | 0 | 0 | - |
| B : Resistant strain of Mizuaoi (*Monochoria korsakowii*) | | | | | |
| D : Resistant strain of Hotarui(*Scirpus juncoides*) | | | | | |

**Table 16.**

| Test example 6 (soil application) | | | | | |
|---|---|---|---|---|---|
| **No. of Sample** | **Dose (g ai/ha)** | | **Herbicidal efficacy Point)** | | **Phytotoxicity** |
| | **Comp (2)** | **Comp (3)** | **B** | **D** | **rice** |
| Comp (2) | 12.5 | | 3 | 1 | - |
| | 25 | | 4 | 2 | - |
| | 50 | | 5 | 3 | +/- |
| Comp (3) | | 25 | 0 | 0 | - |
| | | 50 | 0 | 0 | +/- |
| This Invention | 300 | 25 | 5 | 5 | - |
| | 600 | 50 | 5 | 5 | - |
| Control | | | 0 | 0 | - |
| B : Resistant strain of Mizuaoi (*Monochoria korsakowii*) | | | | | |
| D : Resistant strain of Hotarui(*Scirpus juncoides*) | | | | | |

**Table 17.**

| Test example 6 (soil application) | | | | | |
|---|---|---|---|---|---|
| **No. of Sample** | **Dose (g ai/ha)** | | **Herbicidal efficacy Point)** | | **Phytotoxicity** |
| | **Comp (2)** | **Comp (4)** | **B** | **D** | **rice** |
| Comp (2) | 12.5 | | 3 | 1 | - |
| | 25 | | 4 | 2 | - |
| | 50 | | 5 | 3 | +/- |
| Comp (4) | | 15 | 0 | 0 | - |
| | | 30 | 0 | 0 | +/- |
| This Invention | 300 | 15 | 5 | 5 | - |
| | 600 | 30 | 5 | 5 | - |
| Control | | | 0 | 0 | - |
| B : Resistant strain of Mizuaoi (*Monochoria korsakowii*) | | | | | |
| D : Resistant strain of Hotarui(*Scirpus juncoides*) | | | | | |

**Table 18.**

| Test example 6 (soil application) | | | | | |
|---|---|---|---|---|---|
| **No. of Sample** | **Dose (g ai/ha)** | | **Herbicidal efficacy Point)** | | **Phytotoxicity** |
| | **Comp (2)** | **Comp (5)** | **B** | **D** | **rice** |
| Comp (2) | 12.5 | | 3 | 1 | - |
| | 25 | | 4 | 2 | - |
| | 50 | | 5 | 3 | +/- |
| Comp (5) | | 10.5 | 0 | 0 | - |
| | | 21 | 0 | 0 | +/- |
| This Invention | 300 | 10.5 | 5 | 5 | - |
| | 600 | 21 | 5 | 5 | - |
| Control | | | 0 | 0 | - |
| B : Resistant strain of Mizuaoi (*Monochoria korsakowii*) | | | | | |
| D : Resistant strain of Hotarui(*Scirpus juncoides*) | | | | | |

**Table 19.**

| Test example 6 (soil application) | | | | | |
|---|---|---|---|---|---|
| **No. of Sample** | **Dose (g ai/ha)** | | **Herbicidal efficacy Point)** | | **Phytotoxicity** |
| | **Comp (2)** | **Comp (6)** | **B** | **D** | **rice** |
| Comp (2) | 12.5 | | 3 | 1 | - |
| | 25 | | 4 | 2 | - |
| | 50 | | 5 | 3 | +/- |
| Comp (6) | | 42.5 | 0 | 0 | - |
| | | 85 | 0 | 0 | +/- |
| This Invention | 300 | 42.5 | 5 | 5 | - |
| | 600 | 85 | 5 | 5 | - |
| Control | | | 0 | 0 | - |
| B : Resistant strain of Mizuaoi (*Monochoria korsakowii*) | | | | | |
| D : Resistant strain of Hotarui(*Scirpus juncoides*) | | | | | |

c

**Table 20.**

| Test example 6 (soil application) | | | | | |
|---|---|---|---|---|---|
| **No. of Sample** | **Dose (g ai/ha)** | | **Herbicidal efficacy Point)** | | **Phytotoxicity** |
| | **Comp (2)** | **Comp (7)** | **B** | **D** | **rice** |
| Comp (2) | 12.5 | | 3 | 1 | - |
| | 25 | | 4 | 2 | - |
| | 50 | | 5 | 3 | +/- |
| Comp (7) | | 12 | 0 | 0 | - |
| | | 24 | 0 | 0 | +/- |
| This Invention | 300 | 12 | 5 | 5 | - |
| | 600 | 24 | 5 | 5 | - |
| Control | | | 0 | 0 | - |
| B : Resistant strain of Mizuaoi (*Monochoria korsakowii*) | | | | | |
| D : Resistant strain of Hotarui(*Scirpus juncoides*) | | | | | |

**Table 21.**

| Test example 6 (soil application) | | | | | |
|---|---|---|---|---|---|
| **No. of Sample** | **Dose (g ai/ha)** | | **Herbicidal efficacy Point)** | | **Phytotoxicity** |
| | **Comp (2)** | **Comp (8)** | **B** | **D** | **rice** |
| Comp (2) | 12.5 | | 3 | 1 | - |
| | 25 | | 4 | 2 | - |
| | 50 | | 5 | 3 | +/- |
| Comp (8) | | 30 | 0 | 0 | - |
| | | 60 | 0 | 0 | +/- |
| This Invention | 300 | 12 | 5 | 5 | - |
| | 600 | 24 | 5 | 5 | - |
| Control | | | 0 | 0 | - |
| B : Resistant strain of Mizuaoi (*Monochoria korsakowii*) | | | | | |
| D : Resistant strain of Hotarui(*Scirpus juncoides*) | | | | | |

### [EFFECTS OF INVENTION]

Based on the results of the test examples described above, it has been elucidated that the compositions of the present invention show clear enhanced effects compared to those of single use of each active ingredient, and that it can control various weeds at very low doses.

Namely, as clearly seen in the test examples described above, there have been observed enlarged herbicidal spectra and enhanced herbicidal efficacy due to synergism being unexpectedly observed in some weeds compared to those of single use of the compound (3), (4), (5), (6), (7) or (8), and not observed at all any increased phytotoxicity on rice plants.
The application time can be selected optionally in the wide range from pre-transplantation of rice seedlings to the early growth stage of weeds (approximately after 20 days from transplantation ), however, the highest herbicidal. effects can be obtained by applying in the range from pre-germination to growing stage of weeds (immediately after transplantation to the 15th day after transplantation).

From the outstanding effects of the compositions of the present invention, it can be strongly suggested that the compound (1) or (2) has increased herbicidal effect on the weeds being resistant against the compounds (3), (4), (5), (6), (7) or (8). Consequently the compositions of the present invention can supply herbicides showing high herbicidal effects on weeds being resistant against herbicides as an enzyme inhibitor of acetobutyric acid synthesis. Thus, this invention is very useful technique in the field of agriculture.
In addition, the present invention can supply compositions being economic and less environmental loading, by the fact that the herbicides of this invention show outstanding herbicidal effects even decreasing the application doses.

## Claims

1. Herbicidal composition **characterised by** containing as active ingredients A oxadiazon and one or more compounds selected from the chemical group B consisting of bensulfuron methyl, azimsulfuron, imazosulfuron and ethoxysulfuron.

2. Herbicidal composition according to claim 1 wherein the active ingredients are in the range of 0.01 to 99% by weight, preferably 0.1 to 80%.

3. Herbicidal composition according to claim 1 or 2 which comprises one part of oxadiazon mixed with:
0.0001 to 10 weight part, more preferably 0.001 to 1 weight part of bensulfuron-methyl, and/or
0.0001 to 10 weight part, more preferably 0.001 to 1 weight part of azimsulfuron, and/or
0.0001 to 10 weight part, more preferably 0.001 to 1 weight part of imazosulfuron, and/or
0.0001 to 10 weight part, more preferably 0.001 to 1 weight part of ethoxysulfuron.

4. Use of a composition **characterised by** containing as active ingredients oxadiazon and one or more compounds selected from the chemical group consisting of bensulfuron methyl, azimsulphuron, imazosulfuron and ethoxysulfuron as a herbicidal composition for paddy fields.

5. Use of a composition according to claim 4 wherein the active ingredients are in the range of 0.01 to 99% by weight, preferably 0.1 to 80%

6. Use of a composition according to claim 4 or 5 which comprises one part of oxadiazon mixed with:
0.0001 to 10 weight part, more preferably 0.001 to 1 weight part of bensulfuron-methyl, and/or
0.0001 to 10 weight part, more preferably 0.001 to 1 weight part of azimsulphuron, and/or
0.0001 to 10 weight part, more preferably 0.001 to 1 weight part of imazosulfuron, and/or
0.0001 to 10 weight part, more preferably 0.001 to 1 weight part of ethoxysulfuron.

7. Use of a composition **characterised by** containing as active ingredients one or more compounds selected from the chemical group A consisting of oxadiazon and oxadiargyl and one or more compounds selected from the chemical group B consisting of bensulfuron methyl, azimsulphuron, pyrazosulphuron, imazosulfuron, ethoxysulfuron and cyclosulfamuron as a herbicidal composition for weeds being resistant against herbicides which are enzyme inhibitors of acetobutyric acid synthesis.

## Patentansprüche

1. Herbizide Zusammensetzung, **dadurch gekennzeichnet, daß** sie als wirksame Bestandteile A Oxadiazon und B eine oder mehrere Verbindungen, ausgewählt aus der aus Bensulfuron-methyl, Azimsulfuron, Imazosulfuron und Ethoxysulfuron bestehenden chemischen Gruppe, enthält.

2. Herbizide Zusammensetzung nach Anspruch 1, worin die wirksamen Bestandteile im Bereich von 0,01 bis 99 Gew.%, vorzugsweise 0,1 bis 80 % vorliegen.

3. Herbizide Zusammensetzung nach Anspruch 1 oder 2, die einen Teil Oxadiazon im Gemisch mit:
0,0001 bis 10 Gewichtsteilen, stärker bevorzugt 0,001 bis 1 Gewichtsteil Bensulfuron-methyl und/oder
0,0001 bis 10 Gewichtsteilen, stärker bevorzugt 0,001 bis 1 Gewichtsteil Azimsulfuron und/oder
0,0001 bis 10 Gewichtsteilen, stärker bevorzugt 0,001 bis 1 Gewichtsteil Imazosulfuron und/oder
0,0001 bis 10 Gewichtsteilen, stärker bevorzugt 0,001 bis 1 Gewichtsteil Ethoxysulfuron umfaßt.

4. Verwendung einer Zusammensetzung, die durch einen Gehalt an Oxadiazon und an einer oder an mehreren Verbindungen; ausgewählt aus der aus Bensulfuron-methyl, Azimsulfuron, Imazosulfuron und Ethoxysulfuron bestehenden chemischen Gruppe, als wirksame Bestandteile gekennzeichnet ist, als herbizide Zusammensetzung für Reisfelder.

5. Verwendung einer Zusammensetzung nach Anspruch 4, worin die wirksamen Bestandteile im Bereich von 0,01 bis 99 Gew.%, vorzugsweise 0,1 bis 80 % vorliegen.

6. Verwendung einer Zusammensetzung nach Anspruch 4 oder 5, die einen Teil Oxadiazon, vermischt mit:
0,0001 bis 10 Gewichtsteilen, stärker bevorzugt 0,001 bis 1 Gewichtsteil Bensulfuron-methyl und/oder
0,0001 bis 10 Gewichtsteilen, stärker bevorzugt 0,001 bis 1 Gewichtsteil Azimsulfuron und/oder
0,0001 bis 10 Gewichtsteilen, stärker bevorzugt 0,001 bis 1 Gewichtsteil Imazosulfuron und/oder
0,0001 bis 10 Gewichtsteilen, stärker bevorzugt 0,001 bis 1 Gewichtsteil Ethoxysulfuron,
umfaßt.

7. Verwendung einer Zusammensetzung, die durch einen Gehalt an einer oder an mehreren Verbindungen, ausgewählt aus der aus Oxadiazon und Oxadiargyl bestehenden chemischen Gruppe A, und an einer oder an mehreren Verbindungen, ausgewählt aus der aus Bensulfuron-methyl, Azimsulfuron, Pyrazosulfuron, Imazosulfuron, Ethoxysulfuron und Cyclosulfamuron bestehenden chemischen Gruppe B, als wirksame Bestandteile gekennzeichnet ist, als herbizide Zusammensetzung für Unkräuter, die gegenüber Herbiziden resistent sind, die Enzyminhibitoren der Acetobuttersäuresynthese sind.

## Revendications

1. Composition herbicide **caractérisée en ce qu'**elle contient, en tant qu'ingrédients actifs, A l'oxadiazon et un ou plusieurs composés sélectionnés dans le groupe chimique B consistant en : bensulfuron methyl, azimsulfuron, imazosulfuron et ethoxysulfuron.

2. Composition herbicide selon la revendication 1, dans laquelle les ingrédients actifs se trouvent dans l'intervalle de 0,01 à 99% en poids, de préférence de 0,1 à 80%.

3. Composition herbicide selon la revendication 1 ou 2, qui comprend une partie d'oxadiazon mélangée à :
0,0001 à 10 parties en poids, de préférence de 0,001 à 1 partie en poids de bensulfuron methyl, et/ou
0,0001 à 10 parties en poids, de préférence de 0,001 à 1 partie en poids d'azimsulfuron, et/ou
0,0001 à 10 parties en poids, de préférence de 0,001 à 1 partie en poids d'imazosulfuron, et/ou
0,0001 à 10 parties en poids, de préférence de 0,001 à 1 partie en poids d'ethoxysulfuron.

4. Utilisation d'une composition **caractérisée en ce qu'**elle contient, en tant qu'ingrédients actifs, l'oxadiazon et un ou plusieurs composés sélectionnés dans le groupe chimique consistant en : bensulfuron methyl, azimsulphuron, imazosulfuron et ethoxysulfuron en tant qu'une composition herbicide pour les rizières.

5. Utilisation selon la revendication 4, dans laquelle les ingrédients actifs se trouvent dans l'intervalle de 0,01 à 99% en poids, de préférence de 0,1 à 80%.

6. Utilisation d'une composition selon la revendication 4 ou 5, qui comprend une partie d'oxadiazon mélangée à :
0,0001 à 10 parties en poids, de préférence de 0,001 à 1 partie en poids de bensulfuron methyl,
et/ou
0,0001 à 10 parties en poids, de préférence de 0,001 à 1 partie en poids d'azimsulphuron,
et/ou
0,0001 à 10 parties en poids, de préférence de 0,001 à 1 partie en poids d'imazosulfuron,
et/ou
0,0001 à 10 parties en poids, de préférence de 0,001 à 1 partie en poids d'ethoxysulfuron.

7. Utilisation d'une composition **caractérisée en ce qu'**elle contient, en tant qu'ingrédients actifs, un ou plusieurs composés sélectionnés dans le groupe chimique A consistant en : oxadiazon et oxadiargyl et un ou plusieurs composés sélectionnés dans le groupe chimique B consistant en : bensulfuron methyl, azimsulphuron, pyrazosulphuron, imazosulfuron, ethoxysulfuron et cyclosulfamuron en tant qu'une composition herbicide pour les mauvaises herbes résistant aux herbicides qui sont des inhibiteurs enzymatiques de la synthèse de l'acide acétobutyrique.
